# EUROPEAN PATENT APPLICATION

(11) **EP 4 468 413 A1**
(43) Date of publication of application: **27.11.2024**
(21) Application number: 24167583.4
(22) Date of filing: 28.03.2024
(51) Int. Cl.: H01M 4/36, H01M 4/38, H01M 4/587, H01M 4/62, H01M 10/0525, H01M 4/58, H01M 4/66, H01M 4/78, H01M 4/80, H01M 4/133, H01M 4/134, H01M 4/02

(54) **NEGATIVE ACTIVE MATERIAL AND RECHARGEABLE LITHIUM BATTERY INCLUDING THE SAME**

(30) Priority: 17.05.2023 KR 20230064008; 23.11.2023 KR 20230164920
(71) Applicant: Samsung SDI Co., Ltd., Yongin-si, Gyeonggi-do 17084 (KR)
(72) Inventor: SHIN, Changsu, 17084 Yongin-si (KR); KIM, Youngugk, 17084 Yongin-si (KR); KIM, Yookyung, 17084 Yongin-si (KR); OH, Doori, 17084 Yongin-si (KR); NAH, Jaehou, 17084 Yongin-si (KR); WON, Jongmin, 17084 Yongin-si (KR); KIM, Young-Min, 17084 Yongin-si (KR); KANG, Eunji, 17084 Yongin-si (KR)
(74) Representative: Marks & Clerk LLP

(57) **Abstract**

A negative active material and a rechargeable lithium battery including the same. The negative active material includes an inorganic supporter in which pores are formed; a silicon layer coated on the inorganic supporter; and a carbon-based material positioned on the pores of the inorganic supporter and a surface of the inorganic supporter.

## Description

### BACKGROUND

### 1. Field

Embodiments relate to a negative active material and a rechargeable lithium battery including the negative active material.

### 2. Description of the Related Art

Recently, the rapid development of electronic devices such as mobile phones, laptop computers, and electric vehicles using batteries has resulted in surprising increases in demand for rechargeable batteries with relatively high capacity and lighter weight. For example, a rechargeable lithium battery has recently drawn attention as a driving power source for portable devices, as it has lighter weight and high energy density. Accordingly, research for improving performance of rechargeable lithium batteries is actively being conducted.

A rechargeable lithium battery includes a positive electrode and a negative electrode, which includes active material being capable of intercalating and deintercalating lithium ions, and an electrolyte and the rechargeable lithium battery generate electrical energy due to oxidation and reduction reactions if lithium ions are intercalated and deintercalated into the positive electrode and the negative electrode.

### SUMMARY

Embodiments are directed to a negative active material exhibiting improved cycle-life characteristics.

Some embodiments are directed to a rechargeable lithium battery including the negative active material.

Some embodiments are directed to a negative active material including an inorganic supporter with formed pores; a silicon layer coated on the inorganic supporter; and a carbon-based material positioned on the silicon layer.

In some embodiments, the inorganic supporter may include Al₂O₃, ZrO₂, SiO₂, TiO₂, SiC, or a combination thereof.

In some embodiments, the carbon-based material may be positioned to either completely or partially fill the pores.

In some embodiments, the carbon-based material may include amorphous carbon, crystalline carbon, or a combination thereof. In one or more embodiments, the carbon-based material may be amorphous carbon.

In some embodiments, the silicon layer may include amorphous silicon. The silicon may have a full width at half maximum (FWHM) of about 0.5 degrees (°) to about 10 degrees (°).

In some embodiments, the weight ratio of the inorganic supporter and the silicon layer may be about 40:60 to 70:30.

In some embodiments, the silicon layer may have a thickness of about 5 nm to about 100 nm.

In some embodiments, the carbon-based material positioned on the surface of the inorganic supporter may be positioned at a thickness of about 1 nm to about 50 nm.

In some embodiments, the carbon-based material may have a crystal size of about 5 nm or less.

In some embodiments, the amount of the carbon-based material may be about 5 wt% to about 30 wt% based on 100 wt% of the negative active material.

In some embodiments, the amount of silicon included in the negative active material may be about 20 wt% to about 60 wt% based on 100 wt% of the negative active material.

In some embodiments, the negative active material may be prepared by using the porous inorganic supporter having a porosity of about 10% to about 90%. The pores formed in the porous inorganic supporter may have a diameter of about 1 nm to about 100 nm. The distance between the pores may be about 5 nm to about 150 nm in the porous inorganic supporter.

Some embodiments are directed to a rechargeable lithium battery that includes a negative electrode including the negative active material, a positive electrode, and an electrolyte.

The negative active material according to the embodiments has excellent cycle-life characteristics.

At least some of the above and other features of the invention are set out in the claims.

### BRIEF DESCRIPTION OF THE DRAWINGS

Features will become apparent to those of skill in the art by describing in detail embodiments with reference to the attached drawings, in which:
FIG. 1 schematically shows the structure of the negative active material for a rechargeable lithium battery according to some embodiments;
FIG. 2 schematically shows the structure of the negative active material for a rechargeable lithium battery according to some embodiments;
FIG. 3 is a schematic view showing the porous inorganic supporter included in the negative active material according to some embodiments; and
FIG. 4 is a schematic diagram showing a rechargeable lithium battery according to some embodiments.

### DETAILED DESCRIPTION

Example embodiments will now be described more fully hereinafter with reference to the accompanying drawings; however, they may be embodied in different forms and should not be construed as limited to the embodiments set forth herein. Rather, these embodiments are provided so that this disclosure will be thorough and complete, and will fully convey implementations to those skilled in the art.

In the drawing figures, the dimensions of layers and regions may be exaggerated for clarity of illustration. Like reference numerals refer to like elements throughout.

Hereinafter, embodiments of the present invention are described in detail. However, these embodiments are merely examples, the present invention is not limited thereto, and the present invention is defined by the scope of the claims.

In the present disclosure, when a definition is not otherwise provided, a particle diameter indicates an average particle diameter or size (D50) where a cumulative volume is about 50 volume% in a particle size distribution. The average particle size (D50) may be measured by a method well known to those skilled in the art, for example, by a particle size analyzer, or by a transmission electron microscopic image, or a scanning electron microscopic image. Alternatively, a dynamic light-scattering measurement device is used to perform a data analysis, and the number of particles is counted for each particle size range, and from this, the average particle diameter (D50) value may be easily obtained through a calculation.

In one or more embodiments, the thickness may be measured by a SEM image or a TEM image, but it is not limited thereto, and thus, it may be measured by any techniques as long as the thickness is measured. The thickness may be an average thickness.

A negative active material 1 according to one or more embodiments includes an inorganic supporter 3; and a coating layer 7 formed on a surface of the inorganic supporter 3.

The inorganic supporter 3 is formed with pores 9, and an interior wall of the inorganic supporter 3 may be coated with a silicon layer 7. The inorganic supporter 3 includes the silicon layer 7 formed on an inner surface of the inorganic supporter 3. In more detail, the interior wall or an inner surface of the inorganic supporter 3 may be partially or completely coated with the silicon layer 7.

The coating layer includes a carbon-based material and may be the carbon-based material positioned on the silicon layer. For example, the carbon-based material may be positioned on the silicon layer coated on the inorganic supporter or may be positioned on the silicon layer coated on the interior wall of the inorganic supporter.

The negative active material 1 includes the inorganic supporter 3 with pores 9, the interior walls of which are coated with the silicon layer 7, and the pores 9 may be partially or completely filled with a carbon-based material 5. For example, the interior wall of the inorganic supporter 3 may be coated with the silicon layer 7 and the inside of the pores 9 may be filled with the carbon-based material 5. If some of the pores 9 are filled with the carbon-based material 5, the negative active material 1 has empty pores 9, and if all the pores 9 are filled with the carbon-based material 5, there are no empty pores 9 in the negative active material 1.

In one or more embodiments, silicon positioned in the pores of the supporter in the negative active material may be presented as a silicon layer 7, for example, in a film coated on the interior wall of the inorganic supporter 3. The inside of the pores 9 may be filled with the carbon-based material 5.

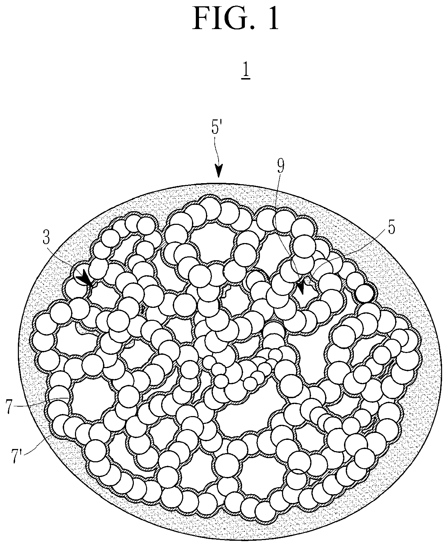

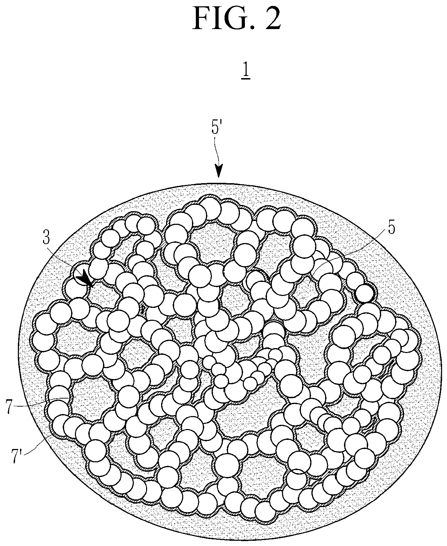

The schematic structure of such a negative active material 1 is shown in FIG. 1 and FIG. 2. As shown in FIG. 1 and FIG. 2, the silicon layer 7 is coated on the interior wall of the pores 9 of the porous inorganic supporter 3. The inside of the pores 9 in the negative active material 1 may be filled or partly filled with the carbon-based material 5. For example, as shown in FIG. 1, the carbon-based material 5 may fill some of the pores 9, or as shown in FIG. 2, the pores 9 may be completely filled with the carbon-based material 5.

If some pores 9 are filled with the carbon-based material 5, some of the pores 9 are empty, so if volume expansion of silicon occurs during charging and discharging, the empty spaces inside the empty pores 9 or partially empty pores 9 may absorb volume expansion, which suppresses volume expansion of the negative active material 1.

If all of the pores 9 are substantially completely filled with the carbon-based material 5, there is hardly any space for impregnating the electrolyte to the negative active material during charging and discharging, thereby improving the cycle-life characteristics.

For example, some pores 9 may be partially filled or all pores 9 may be completely filled with the carbon-based material 5, and thus, all cases are appropriate, regardless of degree of filling. Filling the inside of the pores 9 with the carbon-based material 5 may improve the ionic conductivity.

The negative active material 1 according to some embodiments includes the coating layer 7 positioned on the surface of the inorganic supporter 3, and the coating layer may include a silicon layer 7' on the surface of the inorganic supporter 3 and the carbon-based material-included coating layer 5' on the silicon layer 7'. For example, the silicon layer 7' may be covered with the carbon-based material-included coating layer 5'.

In the negative active material 1 of one or more embodiments, silicon is positioned inside of the pores 9 of the inorganic supporter 3 so that the small sized silicon, for example nano silicon, may be included. The inorganic supporter 3 may prevent the oxidation of silicon so that nano silicon may be maintained without generation of silicon oxide.

The negative active material 1 includes such a size, a small particle diameter, for example, of nano silicon, which is coated on the interior wall of the inorganic supporter 3 so that the area in contact with the electrolyte is small. This inhibits volume expansion during charging and discharging, and thus, the cycle-life characteristics may be improved and capacity may be increased.

The thickness of the silicon layer 7 coated on the interior wall of the inorganic supporter may 3 be about 5 nm to about 100 nm, or about 5 nm to about 50 nm. If the thickness of the silicon layer 7 is within the range, the improved cycle-life characteristics may be realized and volume expansion during charging and discharging may be further suppressed.

The inorganic supporter may be Al₂O₃, ZrO₂, SiO₂, TiO₂, SiC, or a combination thereof. Inclusion of Al₂O₃, ZrO₂, SiO₂, TiO₂, SiC, or a combination thereof in the inorganic supporter may render excellent electrochemical stability, thereby reducing initial irreversible capacity and exhibiting a long cycle-life.

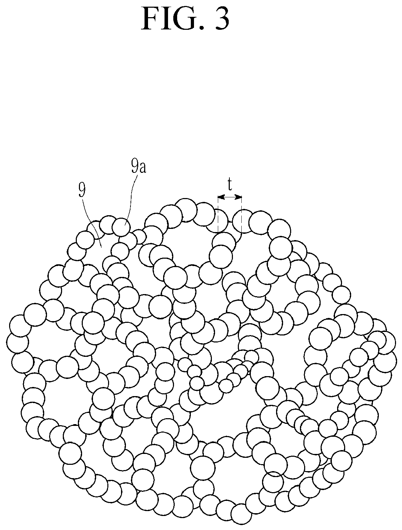

In one or more embodiments, the inorganic supporter 3 may be formed by connecting the inorganic material particles, and as shown in FIG. 3, such inorganic material particles may be connected to form a plurality of pores 9. A pore wall 9a defined by the plurality of pores 9 may be included. In FIG. 3, t indicates a length between the pores.

The amount of silicon included in the negative active material 1 according to one or more embodiments may be about 20 wt% to about 60 wt%, or about 30 wt% to about 50 wt% based on the total 100 wt% of the negative active material 1. If the amount of the silicon included in the negative active material 1 is within the range, much higher capacity and efficiency may be exhibited and further improved cycle-life may be realized. In one or more embodiments, the amount of the silicon means the total amount by summing the amounts of silicon coated on the pores 9 and the surface of the supporter 3.

In some embodiments, regardless of the position of silicon included in the negative active material, the total amount of silicon is important and the amount of silicon at each position is not significant.

In some embodiments, the silicon layer 7 may include amorphous silicon. If silicon included in the silicon layer 7 is amorphous silicon, deterioration due to volume expansion during charge/discharge may be further effectively suppressed and excellent cycle-life characteristics may be exhibited.

In one or more embodiments, silicon included in the silicon layer 7 may have a full width at half maximum (FWHM) of about 0.5 degrees (°) to about 10 degrees (°), or about 1.5 degrees (°) to about 8 degrees (°). The full width at half maximum may be measured by an X-ray diffraction using a CuKα ray and may be a full width at half maximum of a (111) plane of silicon. If the full width at half maximum of silicon is within the range, long cycle-life and low expansion may be exhibited.

The X-ray diffraction analysis may be measured under a condition of a scan speed (°/s) of about 0.04 to about 0.06, a step size (°/step) of about 0.01 to about 0.03 in a range of 2θ= 10° to 80°, and optionally, time per step of about 62.475s.

The carbon-based material may include amorphous carbon, crystalline carbon, or a combination thereof, and according to one or more embodiments, may be amorphous carbon. If the carbon-based material is amorphous carbon, the lithium ion transportation speed is faster so that lithium ion connection passage may be formed well, exhibiting better rate capability and obtaining further reduced resistance.

The amorphous carbon may be pitch carbon, soft carbon, hard carbon, mesophase pitch carbide, sintered coke, carbon fiber, or a combination thereof, and the crystalline carbon may be artificial graphite, natural graphite, or a combination thereof.

The thickness of the carbon-based material positioned on the surface of the inorganic supporter 3, for example, the thickness of the carbon-based material-including coating layer 5' coated on the silicon layer 7' on the surface of the inorganic supporter 3 may be about 1 nm to about 50 nm, or about 1 nm to about 20 nm. If the thickness of the carbon-based material-including coating layer 5' is within the range, a better electrical conductivity, efficiency, and cycle-life may be realized.

The carbon-based material 5 may have a full width at half maximum (FWHM) of about 2 degrees (°) or more, or full width at half maximum of about 2 degrees (°) to about 20 degrees (°). The full width at half maximum may be measured by an X-ray diffraction by using a CuKα ray and may be the full width at half maximum of a (002) plane of the carbon-based material appearing at about 24 degrees (°) to about 26 degrees (°). The carbon-based material may have a crystal size of about 5 nm or less, or a crystal size of about 0.1 nm to about 3 nm. The crystal size may be an average size (D50) and may be measured by the methods already described herein.

If the full width at half maximum and the crystal size of the carbon-based material are within the range, much better electrical conductivity may be obtained.

The amount of the carbon-based material included in the negative active material may be about 5 wt% to about 30 wt%, or about 10 wt% to about 25 wt% based on 100 wt% of the negative active material. If the amount of the carbon-based material included in the negative active material is within the range, much excellent electrical conductivity and output characteristic may be obtained.

In one or more embodiments, the total amount of the carbon-based material included in the negative active material is only important, and each amount at each position is not significant.

In one or more embodiments, the inorganic supporter 3 includes pores 9 inside thereof and a diameter of pores 9 in which the silicon layer 7 and the carbon-based material are not filled may be about 1 nm to 100 nm, or about 1 nm to about 50 nm. The porosity may be about 10% to about 90%, or about 30% to about 90%. The volume of the pores formed in the porous inorganic supporter may be about 0.4 cm³/g to about 3 cm³/g, about 0.4 cm³/g to about 2 cm³/g, or about 0.4 cm³/g to about 1 cm³/g.

In some embodiments, the diameter of the pores, the porosity, and the volume of the pores may be measured by using a Barrett-Joyner-Halenda (BJH) through an N₂ absorption isotherm. For example, the inorganic supporter is pre-treated by increasing a temperature to about 523 K at a rate of about 10 K/min and maintaining it for 2 hours to 10 hours under a vacuum of about 100 mmHg or less, and is used to measure the diameter of the pores, the porosity, and the volume of the pores. In the liquid nitrogen of which a relative pressure (P/P₀) is adjusted to about 0.1 or less, the nitrogen is adsorbed into the inorganic supporter at the relative pressure from 0.01 to 0.995 at about 32 points, and the nitrogen is desorbed to the relative pressure of about 0.14 at about 24 points. From the absorbed N₂ amount, the pore volume may be determined. From the pressure at which excess N₂ is adsorbed, the diameter of the pores may be obtained. The absorbed N₂ amount relative to the volume of the inorganic supporter may be calculated as the porosity.

A negative active material according to one or more embodiments may be prepared by the following procedures.

First of all, a porous inorganic supporter 3 is prepared. The porous inorganic supporter 3 may be prepared by an aerogel procedure or a spray-drying procedure, and hereinafter, each procedure will be described.

In the aerogel procedure, water glass including SiO₂ is diluted with water to prepare a water glass solution including SiO₂. The water glass may further include Na₂O, K₂O, and Fe₂O₃ in addition to SiO₂. In the water glass, an amount of SiO₂ may be about 20 wt% to about 40 wt% based on the total 100 wt% of the water glass, and in the diluted SiO₂-including water glass solution, an amount of SiO₂ may be about 3 wt% to about 6 wt% based on the total 100 wt% of the diluted SiO₂-including water glass solution. If the amount of SiO₂ included in the water glass is within the range, the inside pore may be freely controlled.

In one or more embodiments, among the components included in the water glass, the amount of the components other than the amount of SiO₂ may be suitably adjusted.

The water glass solution is mixed with an acid solution to prepare a silica sol. Through the mixing with the acid solution, a sodium component included in the water glass solution may be removed. If the mixing of the water glass solution with the acid solution is not performed, for example, a neutralization with the solution of the acid is not performed, the strong alkali water glass may not prepare a silica sol, thereby preparing no objective negative active material. For example, it is difficult to prepare a porous supporter 3 having sufficient pores and thus, it is difficult to fill silicon in the pores 9 of the porous supporter 3 in a sufficient amount.

The solution of the acid may be a solution including an acid such as hydrochloric acid, nitric acid, sulfuric acid, acetic acid, fluoric acid, or a combination thereof, and the solvent may be water. The solution of the acid may have a concentration of about 0.2 M to about 3 M.

A mixing ratio of the water glass solution and the solution of the acid may be about 8:2 to about 6:2 by volume ratio, or about 6:1 to about 6:0.5 by volume ratio.

Thereafter, an alcohol is added to the silica sol and agitated to a gel, thereby obtaining a wet gel. The alcohol may be used in an amount corresponding to about 40% to about 60% based on the volume of the silica sol. If the used amount of the alcohol is within the range, a more uniform gelation may be induced. A washing of the wet gel may be further performed.

The wet gel may be modified into a hydrophobic surface by using a non-polar organic solvent and an organic silane compound. The modification may be performed by mixing the wet gel with the non-polar organic solvent and the organic silane compound. The mixing may be performed for 2 hours to 4 hours. According to the mixing, a solvent substitution reaction may occur, and the surface of the gel may be modified to be hydrophobic.

Before mixing, washing the wet gel after separately collecting may be further performed.

The non-polar organic solvent may be a solvent capable of modifying a surface of a target material into a hydrophobic surface. For example, the solvent may be isopropyl alcohol, n-hexane, n-heptane, xylene, trimethylchlorosilane, cyclohexane, or a combination thereof.

The organic silane compound may include trimethylchlorosilane, hexamethyldisilazane, methyltrimethoxysilane, trimethylethoxysilane, ethyltriethoxysilane, phenyltriethoxysilane, or a combination thereof.

In the mixing, a mixing ratio of the wet gel, the non-polar organic solvent, and the organic silane compound may be about 1:1:1 to about 1:1:0.5 by volume ratio or about 1: 0.5:0.5 by volume ratio to about 1:0.5:0.25 by volume ratio.

Thereafter, the prepared surface modified gel is dried to prepare a porous inorganic supporter 3. The drying may be performed at about 50 °C to about 180 °C, or about 70 °C to about 160 °C. The drying may be performed for 1 hour to 5 hours or about 1 hour to about 3 hours.

In another embodiment, the drying may be performed by 2 steps of a low temperature drying and a high temperature drying. The low temperature drying may be performed at about 50 °C to about 80 °C for about 1 hour to about 2 hours and the high temperature drying may be performed at about 140 °C to about 170 °C for about 1 hour to about 3 hours.

The drying may be performed under atmospheric pressure.

The spray-drying procedure according to another embodiment may be performed by mixing a M-containing oxide, where M is Al, Zr, Si, Ti, or a combination thereof, a solvent, and an additive to prepare an oxide liquid, spray-drying the oxide liquid to prepare a porous oxide cluster, and heat-treating.

The M-containing oxide may be oxide including the M, and for example, may be Al₂O₃, ZrO₂, SiO₂, TiO₂, or a combination thereof, and SiO₂ may be fumed SiO₂.

The oxide may have an average particle diameter of about 5 nm to about 100 nm, about 5 nm to about 80 nm, about 5 nm to about 50 nm, or about 30 nm to about 50 nm. The solvent may be water, an organic solvent, or a mixture thereof. The organic solvent may be ethanol, isopropyl alcohol, butanol, or a combination thereof. If the mixture of the organic solvent with water is used, the mixing ratio may be suitably adjusted, but for example, may be about 1: 1 to 1:0.5 by a volume ratio.

The additive may be fatty acid, polysaccharide, polyvinyl pyrrolidone, polyethylene glycol, carboxymethyl cellulose, or a combination thereof, the fatty acid may be palmitic acid, stearic acid, or a combination thereof, and the polysaccharide may be sucrose, glucose, fructose, or a combination thereof.

A mixing ratio of the oxide and the additive may be about 95:5 by weight ratio to about 60:40 by weight ratio. A mixing ratio of the mixture (oxide + the additive) and the solvent may be about 5: 95 to about 30:80 by weight ratio or about 10:90 to about 20:80 by weight ratio.

The spray-drying may be performed at about 150 °C to about 200 °C.

The oxide cluster may have a particle diameter of about 5 µm to about 30 µm, or about 5 µm to about 15 µm, and may have a specific surface area of about 50 m²/g to about 200 m²/g, or about 50 m²g to about 150 m²/g. The specific surface area may be a BET specific surface area.

The heat-treatment may be performed at about 500 °C to about 1200 °C, or about 600 °C to about 1000 °C. The heat-treatment may be performed for about 1 hour to about 5 hours, or about 1 hour to about 3 hours.

The heat-treatment may be performed under an inert atmosphere, and the inert atmosphere may be an atmosphere of N₂, Ar, helium, or a combination thereof.

By the process, a porous inorganic supporter 3 may be prepared and the prepared pores 9 may have a diameter of about 1 nm to about 100 nm, or about 1 nm to about 50 nm. The porosity may be about 10% to about 90%, or about 30% to about 90%. The pore volume formed in the porous inorganic supporter may be about 0.4 cm³/g to about 3 cm³/g, about 0.4 cm³/g to about 2 cm³/g, or about 0.4 cm³/g to about 1 cm³/g. If the diameter of the pores 9 is within the range, the silicon size may be further suitably controlled and then the cycle-life may be further improved. If the porosity and the pore volume are within the ranges, the silicon filling rate may be suitably controlled to obtain at much higher capacity.

In the porous inorganic supporter 3, the distance between one pore 9 and another pore 9 may be about 5 nm to about 150 nm, about 5 nm to about 100 nm, or about 5 nm to about 50 nm. The distance between the pores 9 is denoted as t of FIG. 3. If the distance between the pores 9 is within the range, the pore size and the porosity may be further effectively controlled.

In one or more embodiments, the porous inorganic supporter 3 has pores 9 formed by connecting the inorganic material particles and the distance between one pore 9 and another pore 9 may correspond to a particle diameter of the inorganic material particle. The pore wall is defined by a plurality of pores 9, so that the distance between one pore 9 and another pore 9 may be a thickness of the pore wall.

A silicon raw material is vapor deposited to the prepared porous inorganic supporter. The vapor deposition may be a chemical vapor deposition (CVD). The silicon raw material may be a SiH₄ gas, a Si₂H₆ gas, a SisHs gas, a SiCl₄ gas, or a combination thereof.

The vapor deposition may be performed at a temperature at which silicon to be deposited is converted into amorphous Si, a-Si, and, for example, about 400 °C to about 700 °C. If the vapor deposition is performed at a temperature of more than about 700 °C, silicon to be deposited is crystallized, thereby increasing the volume expansion during charge and discharge and deteriorating the cycle-life characteristics, which is inappropriate. If it is performed at a temperature of less than about 400 °C, the silicon raw material is not readily decomposed and remains as silicon raw material acting as impurities in the porous inorganic supporter, which is inappropriate.

In the vapor deposition, the flow rate of the gas, which is a silicon raw material, may be about 0.1 L/min to about 1 L/min, or about 0.3 L/min to about 0.6 L/min. By the process, silicon may be filled in the pore of the porous inorganic supporter 3.

The vapor deposition may be performed for about 0.1 hours to about 2 hours.

If the deposition is conducted at the appropriate temperature, with the appropriate gas flow rate and duration, silicon is coated on the interior wall of the porous inorganic supporter 3 to form a silicon layer 7 and to form a silicon layer 7' on the surface of the porous inorganic supporter 3 by positioning some silicon on the surface of the porous inorganic supporter 3. In one or more embodiments, the gas flow rate and time for the vapor deposition may be adjusted within the range to coat silicon on the interior wall of the porous inorganic supporter and to not completely fill the pores 9 with silicon. For example, if the gas flow rate is about 0.5 L/min to about 1 L/min, the vapor deposition may be performed for about 0.1 hours to about 0.2 hours, if it is about 0.1 L/min, the vapor deposition may be performed for about 1 hour to about 2 hours, or it is more than about 0.1 L/min and less than about 0.5 L/min, the vapor deposition may be performed for more than about 0.2 hours and less than about 1 hour.

While silicon is coated on the interior wall of the inorganic supporter 3 to form a silicon layer 7, a silicon layer 7' may be formed by positioning some silicon on the surface of the inorganic supporter 3.

The amount of the silicon source material used may be suitably adjusted in order to have a particular weight ratio of the inorganic supporter and silicon, for example, the weight ratio of the inorganic supporter 3 and the silicon layer 7 in the resulting product may be about 40:60 by weight ratio to about 70:30 by weight ratio. If the weight ratio of the inorganic supporter 3 and silicon is within the range, the expansion during charging and discharging may be further suppressed and more improved cycle-life characteristics may be exhibited.

The carbon-based material 5 is filled into the obtained product.

Filling with the carbon-based material 5 may be performed under a vapor procedure by using a carbon precursor, or under a liquid procedure, or a solid procedure.

Filling with the carbon-based material 5 may allow the carbon-based material 5 to be filled inside of the inorganic supporter 3 and to form a carbon-based material included coating layer 5'on the silicon layer 7' formed on the surface of the inorganic supporter 3.

The vapor procedure may be performed by a vapor deposition using a carbon gas as a carbon precursor. The carbon gas may be a C₂H₂ gas, a CH₄ gas, a C₂H₄ gas, or a combination thereof.

The vapor deposition may be performed by a chemical vapor deposition (CVD). The chemical vapor deposition may be thermal chemical vapor deposition, plasma-enhanced chemical vapor deposition, or low-pressure chemical vapor deposition.

In the vapor deposition, the flow rate of the carbon gas may be about 0.3 L/min (liters per minute) to about 1 L/min or about 0.4 L/min to about 0.6 L/min.

The vapor deposition may be performed at about 700 °C to about 1000 °C or about 800 °C to about 900 °C.

The vapor deposition may be performed for about 0.5 hours to about 4 hours, or about 1 hour to about 3 hours. If the vapor deposition is performed for the above times, the carbon-based material 5 may be filled inside of the pores 9 of the porous inorganic supporter 3 to form a carbon-based material including coating layer 5' on the silicon layer 7' formed on the surface of the porous inorganic supporter 3.

Depending on the time for the vapor deposition, the inside of some pores 9 may be partially filled with the carbon-based material, or all pores 9 may be filled with the carbon-based material 5. For example, if the vapor deposition is carried out for about 0.5 hours to about 1 hour, the inside of some pores 9 may be filled with the carbon-based material 5, and in another embodiment, if it is carried out for more than 1 hour and about 4 hours, the pores 9 may be completely filled.

The solid procedure may be performed by using a solid carbon precursor as the carbon precursor and the liquid procedure may be performed by using a carbon precursor liquid prepared by adding the carbon precursor to a solvent.

The solid procedure may include mixing the resulting product with a solid carbon precursor and heat-treating, and the liquid process may include immersing the resulting product into the carbon precursor liquid and heat-treating. The carbon precursor may be an amorphous carbon precursor or a crystalline carbon precursor.

The amorphous carbon precursor is not particularly limited as long as it is a material that prepares amorphous carbon by heat-treatment, but may include coal pitch, petroleum pitch, petroleum-based coke, coal-based cokes, polyvinylchloride, mesophase pitch, tar, low molecular weight heavy oil, polyvinyl alcohol resin, furfuryl alcohol resin, triton, citric acid, stearic acid, sucrose, polyvinylidene fluoride, carboxymethyl cellulose, hydroxypropyl cellulose, regenerated cellulose, polyvinyl pyrrolidone, polyethylene, polypropylene, ethylene-propylene-diene monomer (EPDM), polyacrylic acid, sodium polyacrylate, polyacrylonitrile, glucose, gelatin, saccharide, a phenol resin, a naphthalene resin, a polyamide resin, a furan resin, a polyimide resin, a cellulose resin, a styrene resin, an epoxy resin, a vinyl chloride resin, mesophase pitch, or a combination thereof.

The crystalline carbon precursor is not limited, as long as it may convert into crystalline carbon by heat-treatment, but may be petroleum-based cokes, coal-based cokes, mesophase microbead, or a combination thereof.

The solvent may be ethanol, tetrahydrofuran, toluene, or a combination thereof.

A mixing ratio of the obtained product and the carbon precursor may be about 50:50 wt% to about 90:10 wt%, or about 60:40 wt% to about 85:15 wt%.

The heat treatment may be carried out at about 700 °C to about 1200 °C. The heat treatment may be carried out for about 1 hour to about 7 hours, or about 1 hour to about 5 hours.

According to filling with the carbon-based material 5, the carbon-based material 5 may be filled inside of the pores 9 of the inorganic supporter 3, the interior wall of which is coated with the silicon layer 7. This also forms a carbon-based material included coating layer 5'on the surface of the silicon layer 7', which covers the surface of the inorganic supporter 3.

The amount of the carbon precursor used may be adjusted in order to set the weight ratio among the inorganic supporter 3, the silicon and the carbon (inorganic supporter: silicon: carbon) to about 35:60:5 to about 65:30:5 or about 38:57:5 to about 66.5:28.5:5 in the final product.

A rechargeable lithium battery 100 according to some embodiments includes a negative electrode 20, a positive electrode 10, and an electrolyte.

The negative electrode 20 may include a negative active material layer including the negative active material 1 according to one embodiment, a binder, and optionally a conductive material, and a current collector supporting the negative active material layer.

In the negative active material layer, the amount of the negative active material 1 may be about 95 wt% to about 99 wt% based on the total 100 wt% of the negative active material layer.

The amount of the binder may be about 1 wt% to about 5 wt% based on the total 100 wt% of the negative active material layer.

If the conductive material is further included, the amount of the negative active material 1 may be about 90 wt% to about 98 wt% based on the total 100 wt% of the negative active material layer and amounts of the binder and the conductive material may be about 1 wt% to about 5 wt%, respectively, based on the total 100 wt% of the negative active material layer.

The binder improves binding properties of negative active material particles with one another and with a current collector. The binder may be a non-aqueous binder, an aqueous binder, or a combination thereof.

The non-aqueous binder may be an ethylene propylene copolymer, polyacrylonitrile, polystyrene, polyvinylchloride, carboxylated polyvinylchloride, polyvinyl fluoride, polyurethane, polytetrafluoroethylene, polyvinylidene fluoride, polyethylene, polypropylene, polyamide imide, polyimide, or combinations thereof.

The aqueous binder may be a styrene-butadiene rubber, an acrylated styrene-butadiene rubber (ABR), an acrylonitrile-butadiene rubber, an acrylic rubber, a butyl rubber, a fluorine rubber, an ethylene oxide-containing polymer, polyvinyl pyrrolidone, polypropylene, polyepichlorohydrin, polyphosphazene, an ethylene propylene diene copolymer, polyvinyl pyridine, chlorosulfonated polyethylene, latex, a polyester resin, an acrylic resin, a phenolic resin, an epoxy resin, polyvinyl alcohol, or combinations thereof.

If the aqueous binder is used as a negative electrode binder, a cellulose-based compound may be further used to provide viscosity as a thickener. The cellulose-based compound includes one or more of carboxymethyl cellulose, hydroxypropylmethyl cellulose, methyl cellulose, or alkali metal salts thereof. The alkali metal may be Na, K, or Li. The cellulose-based compound may act as a binder, and thus, it is not necessary to limit an amount thereof. For example, the thickener may be included in an amount of about 0.1 parts by weight to about 3 parts by weight based on 100 parts by weight of the negative active material.

The conductive material is included to provide electrode conductivity, and any electrically conductive material may be used as a conductive material unless it causes a chemical change. Examples of the conductive material may be a carbon-based material such as natural graphite, artificial graphite, carbon black, acetylene black, ketjen black, a carbon fiber, and the like; a metal-based material of a metal powder or a metal fiber including copper, nickel, aluminium, silver, and the like; a conductive polymer such as a polyphenylene derivative; or a mixture thereof.

The current collector may include one selected from a copper foil, a nickel foil, a stainless-steel foil, a titanium foil, a nickel foam, a copper foam, a polymer substrate coated with a conductive metal, and a combination thereof.

A rechargeable lithium battery 100 according to one or more embodiments includes the negative electrode 20, the positive electrode 10, and an electrolyte.

The positive electrode 10 may include a current collector and a positive active material layer including a positive active material formed on the current collector.

The positive active material may include lithiated intercalation compounds that reversibly intercalate and deintercalate lithium ions. In some embodiments, one or more composite oxides of a metal selected from cobalt, manganese, nickel, and a combination thereof, and lithium, may be used. For example, the compounds represented by one of the following chemical formulae may be used. LiₐA_{1-b}X_{b}D¹₂ (0.90≤a≤1.8, 0≤b≤0.5); LiₐA_{1-b}X_{b}O_{2-c1}D¹_{c1} (0.90≤a≤1.8, 0≤b≤0.5, 0≤c1≤0.05); LiₐE_{1-b}X_{b}O_{2-c1}D¹_{c1} (0.90≤a≤1.8, 0≤b≤0.5, 0≤c1≤0.05); LiₐE_{2-b}X_{b}O_{4-c1}D¹_{c1} (0.90≤a≤1.8, 0≤b≤0.5, 0≤c1≤0.05); LiₐNi_{1-b-c}Co_{b}XD¹_{α} (0.90 ≤a≤1.8, 0≤b≤0.5, 0≤c≤0.5, 0<α≤2); LiₐNi_{1-b-c}Co_{b}X_{c}O_{2-α}T_{α} (0.90≤a≤1.8, 0≤b≤0.5, 0≤c≤0.5, 0<α≤2); LiₐNi_{1-b-c}Co_{b}X_{c}O_{2-α}T₂ (0.90≤a≤1.8, 0≤b≤0.5, 0≤c≤0.5, 0<α≤2); LiₐNi_{1-b-c}Mn_{b}XD¹_{α} (0.90≤a≤1.8, 0≤b≤0.5, 0≤c≤0.5, 0<α≤2); LiₐNi_{1-b-c}Mn_{b}X_{c}O_{2-α}T_{α} (0.90≤a≤1.8, 0≤b≤0.5, 0≤c≤0.5, 0<α≤2); LiₐNi_{1-b-c}Mn_{b}X_{c}O_{2-α}T₂ (0.90≤a≤ 1.8, 0≤b≤0.5, 0≤c≤0.5, 0<α≤2); LiₐNi_{b}E_{c}G_{d}O₂ (0.90≤a≤1.8, 0≤b≤0.9, 0≤c≤0.5, 0.001≤d≤0.1); LiₐNi_{b}Co_{c}L¹_{d}GₑO₂ (0.90≤a≤1.8, 0≤b≤0.9, 0≤c≤0.5, 0≤d≤0.5, 0≤e≤0.1); LiₐNiG_{b}O₂ (0.90≤a≤1.8, 0.001≤b≤0.1); LiₐCoG_{b}O₂ (0.90≤a≤1.8, 0.001≤b≤0.1); LiₐMn_{1-b}G_{b}O₂ (0.90≤a≤1.8, 0.001≤b≤0.1); LiₐMn₂G_{b}O₄ (0.90≤a≤1.8, 0.001≤b≤0.1); LiₐMn_{1-g}G_{g}PO₄ (0.90≤a≤1.8, 0≤g≤0.5); QO₂; QS₂; LiQS₂; V₂O₅; LiV₂O₅; LiZO₂; LiNiVO₄; Li_{(3-f)}J₂(PO₄)₃ (0≤f≤2); Li_{(3-f)}Fe₂(PO₄)₃ (0≤f≤2); and LiₐFePO₄ (0.90≤a≤1.8).

In the above chemical formulas, A is selected from Ni, Co, Mn, or a combination thereof; X is selected from Al, Ni, Co, Mn, Cr, Fe, Mg, Sr, V, a rare earth element, or a combination thereof; D¹ is selected from O, F, S, P, or a combination thereof; E is selected from Co, Mn, or a combination thereof; T is selected from F, S, P, or a combination thereof; G is selected from Al, Cr, Mn, Fe, Mg, La, Ce, Sr, V, or a combination thereof; Q is selected from Ti, Mo, Mn, or a combination thereof; Z is selected from Cr, V, Fe, Sc, Y, or a combination thereof; J is selected from V, Cr, Mn, Co, Ni, Cu, or a combination thereof; L¹ is selected from Mn, Al, or a combination thereof.

The compounds may have a coating layer on the surface or may be mixed with another compound having a coating layer. The coating layer may include at least one coating element compound selected from the group consisting of an oxide of a coating element, a hydroxide of a coating element, an oxyhydroxide of a coating element, an oxycarbonate of a coating element, and a hydroxyl carbonate of a coating element. The compound for the coating layer may be amorphous or crystalline. The coating element included in the coating layer may include Mg, Al, Co, K, Na, Ca, Si, Ti, V, Sn, Ge, Ga, B, As, Zr, or mixture thereof. The coating layer may be provided by a method having no adverse influence on properties of a positive active material by using these elements in the compound, and for example, the method may include any coating method such as spray coating, dipping, and the like, but is not illustrated in more detail since it is well-known in the related field.

In the positive electrode 10, the amount of the positive active material may be about 90 wt% to about 98 wt% based on the total weight of the positive active material layer.

In some embodiments, the positive active material layer may further include a binder and a conductive material. The binder and the conductive material may be included in an amount of about 1 wt% to about 5 wt%, respectively based on the total amount of the positive active material layer.

The binder improves binding properties of positive active material particles with one another and with a current collector. Examples of the binder may be polyvinyl alcohol, carboxymethyl cellulose, hydroxypropyl cellulose, diacetyl cellulose, polyvinylchloride, carboxylated polyvinylchloride, polyvinyl fluoride, an ethylene oxide-containing polymer, polyvinyl pyrrolidone, polyurethane, polytetrafluoroethylene, polyvinylidene fluoride, polyethylene, polypropylene, a styrene-butadiene rubber, an acrylated styrene-butadiene rubber, an epoxy resin, nylon, or the like.

The conductive material is included to provide electrode conductivity, and any electrically conductive material may be used as a conductive material unless it causes a chemical change. Examples of the conductive material may include a carbon-based material such as natural graphite, artificial graphite, carbon black, acetylene black, ketjen black, a carbon fiber and the like; a metal-based material of a metal powder or a metal fiber including copper, nickel, aluminium, silver, and the like; a conductive polymer such as a polyphenylene derivative; or a mixture thereof.

The current collector may include Al.

The electrolyte includes a non-aqueous organic solvent and a lithium salt.

The non-aqueous organic solvent serves as a medium for transmitting ions taking part in the electrochemical reaction of a battery.

The non-aqueous organic solvent may include a carbonate-based, ester-based, ether-based, ketone-based, alcohol-based, or aprotic solvent.

The carbonate-based solvent may include dimethyl carbonate (DMC), diethyl carbonate (DEC), dipropyl carbonate (DPC), methylpropyl carbonate (MPC), ethylpropyl carbonate (EPC), methylethyl carbonate (MEC), ethylene carbonate (EC), propylene carbonate (PC), butylene carbonate (BC), or the like. The ester-based solvent may include methyl acetate, ethyl acetate, n-propyl acetate, dimethyl acetate, methyl propionate, ethyl propionate, propyl propionate, decanolide, mevalonolactone, caprolactone, or the like. The ether-based solvent may include dibutyl ether, tetraglyme, diglyme, dimethoxyethane, 2-methyltetrahydrofuran, tetrahydrofuran, or the like. The ketone-based solvent may include cyclohexanone, or the like. The alcohol-based solvent may include ethyl alcohol, isopropyl alcohol, and the like, and examples of the aprotic solvent include nitriles such as R-CN (where R is a C2 to C20 linear, branched, or cyclic hydrocarbon, and may include a double bond, an aromatic ring, or an ether bond), amides such as dimethylformamide, dioxolanes such as 1,3-dioxolane, sulfolanes, and the like.

The non-aqueous organic solvent may be used alone or in a mixture. If the non-aqueous organic solvent is used in a mixture, the mixture ratio may be controlled in accordance with a desirable battery performance, and it may be well known to those skilled in the related art.

The carbonate-based solvent may include a mixture with a cyclic carbonate and a linear carbonate. The cyclic carbonate and linear carbonate are mixed together in a volume ratio of about 1:1 to about 1:9, and if the mixture is used as an electrolyte, it may have enhanced performance.

The non-aqueous organic solvent may further include an aromatic hydrocarbon-based solvent as well as the carbonate-based solvent. The carbonate-based solvent and aromatic hydrocarbon-based solvent may be mixed together in a volume ratio of about 1:1 to about 30:1.

The aromatic hydrocarbon-based organic solvent may be an aromatic hydrocarbon-based compound represented by Chemical Formula 1.

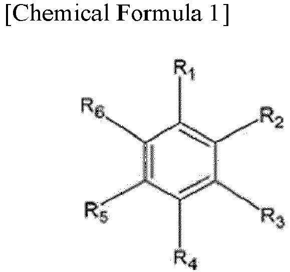

In Chemical Formula 1, R₁ to R₆ are the same or different and are selected from hydrogen, a halogen, a C1 to C10 alkyl group, a haloalkyl group (e.g. a C1 to C10 haloalkyl group), and a combination thereof.

Some examples of the aromatic hydrocarbon-based organic solvent may be selected from benzene, fluorobenzene, 1,2-difluorobenzene, 1,3-difluorobenzene, 1,4-difluorobenzene, 1,2,3-trifluorobenzene, 1,2,4-trifluorobenzene, chlorobenzene, 1,2-dichlorobenzene, 1,3-dichlorobenzene, 1,4-dichlorobenzene, 1,2,3-trichlorobenzene, 1,2,4-trichlorobenzene, iodobenzene, 1,2-diiodobenzene, 1,3-diiodobenzene, 1,4-diiodobenzene, 1,2,3-triiodobenzene, 1,2,4-triiodobenzene, toluene, fluorotoluene, 2,3-difluorotoluene, 2,4-difluorotoluene, 2,5-difluorotoluene, 2,3,4-trifluorotoluene, 2,3,5-trifluorotoluene, chlorotoluene, 2,3-dichlorotoluene, 2,4-dichlorotoluene, 2,5-dichlorotoluene, 2,3,4-trichlorotoluene, 2,3,5-trichlorotoluene, iodotoluene, 2,3-diiodotoluene, 2,4-diiodotoluene, 2,5-diiodotoluene, 2,3,4-triiodotoluene, 2,3,5-triiodotoluene, xylene, and combinations thereof.

The electrolyte may further include vinylethyl carbonate, vinylene carbonate, an ethylene carbonate-based compound represented by Chemical Formula 2 as an additive for improving cycle life.

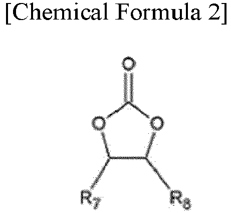

In Chemical Formula 2, R₇ and R₈ are the same or different and may each be independently hydrogen, a halogen, a cyano group (CN), a nitro group (NO₂), or a C1 to C5 fluoroalkyl group, provided that at least one of R₇ and R₈ is a halogen, a cyano group (CN), a nitro group (NO₂), or a C1 to C5 fluoroalkyl group, and R₇ and R₈ are not simultaneously hydrogen.

Examples of the ethylene carbonate-based compound may be difluoroethylene carbonate, chloroethylene carbonate, dichloroethylene carbonate, bromoethylene carbonate, dibromoethylene carbonate, nitroethylene carbonate, cyanoethylene carbonate, fluoroethylene carbonate, or the like. An amount of the additive for improving the cycle-life characteristics may be used within an appropriate range.

The lithium salt dissolved in an organic solvent supplies a battery with lithium ions, basically operates the rechargeable lithium battery, and improves transportation of the lithium ions between a positive electrode and a negative electrode. Examples of the lithium salt include at least one or two supporting salt selected from LiPF₆, LiBF₄, LiSbF₆, LiAsF₆, LiN(SO₂C₂F₅)₂, Li(CF₃SO₂)₂N, LiN(SO₃C₂F₅)₂, Li(FSO₂)₂N (lithium bis(fluorosulfonyl)imide: LiFSI), LiC₄F₉SO₃, LiClO₄, LiAlO₂, LiAlClₐ, LiPO₂F₂, LiN(CₓF₂ₓ₊₁SO₂)(C_{y}F_{2y+1}SO₂), wherein x and y are natural numbers, for example, an integer of about 1 to about 20, lithium difluoro(bisoxolato) phosphate), LiCl, LiI, LiB(C₂O₄)₂ (lithium bis(oxalato) borate: LiBOB) and lithium difluoro(oxalato)borate (LiDFOB). The concentration of the lithium salt may range from about 0.1 M to about 2.0 M. If the lithium salt is included at the above concentration range, an electrolyte may have excellent performance and lithium ion mobility due to optimal electrolyte conductivity and viscosity.

A separator 30 may be located between the positive electrode 10 and the negative electrode 20 depending on a type of a rechargeable lithium battery. The separator 30 may use polyethylene, polypropylene, polyvinylidene fluoride or multilayers thereof having two or more layers and may be a mixed multilayer such as a polyethylene/polypropylene double-layered separator, a polyethylene/polypropylene/polyethylene triple-layered separator, a polypropylene/polyethylene/polypropylene triple-layered separator, and the like.

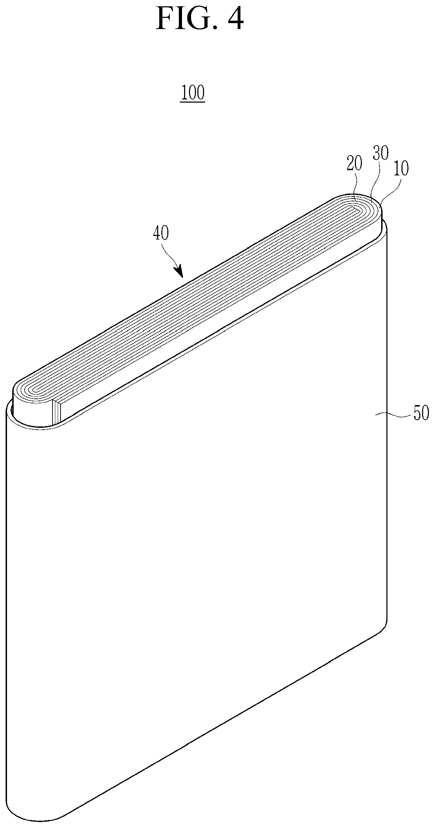

FIG. 4 is an exploded perspective view of a rechargeable lithium battery 100 according to an embodiment. The rechargeable lithium battery 100 according to some embodiments is illustrated as a prismatic battery and may include variously shaped batteries such as a cylindrical battery, a pouch battery, and the like.

Referring to FIG. 4, the rechargeable lithium battery 100 according to some embodiments may include an electrode assembly 40, which is manufactured by winding the positive electrode 10, the negative electrode 20, and the separator 30 located between the positive electrode 10 and the negative electrode 20, and a case 50 housing the electrode assembly 40. An electrolyte (not shown) may be impregnated in the positive electrode 10, the negative electrode 20 and the separator 30.

Hereinafter, examples of the present invention and comparative examples are described. These examples, however, are not in any sense to be interpreted as limiting the scope of the invention.

The following Examples and Comparative Examples are provided in order to highlight characteristics of one or more embodiments, but it will be understood that the Examples and Comparative Examples are not to be construed as limiting the scope of the embodiments. Further, it will be understood that the embodiments are not limited to the particular details described in the Examples and Comparative Examples.

### (Example 1)

A water glass including 29.8 wt% of SiO₂ was diluted with water to prepare a water glass solution including 4.35 wt% of SiO₂. The components other than SiO₂ were Na₂O, K₂O, and Fe₂O₃ in the water glass and only the amount of SiO₂ was relevant so that the amount of the other components was not disclosed.

60 ml was taken from the water glass solution and used in the subsequent process.

60 ml of the water glass solution was mixed with 20 ml of 0.9 M of an aqueous solution of hydrochloric acid and agitated for 5 minutes to prepare 80 ml of silica sol. During the process, sodium components included in the water glass were removed.

80 ml of methanol corresponding to 1/2 volume of the silica was agitated for 5 minutes using a homogenizer. 80 ml of the silica sol was added to the agitated product and agitated for 1 minute to occur gelation reaction to prepare a wet gel. The wet gel was separated and collected, and then washed twice with water.

To the washed wet gel, a non-polar organic solvent and an organic silane compound were ad-mixed at a room temperature, 25 °C, for 3 hours to induce a solvent substitution reaction and a surface modification reaction.

As the non-polar organic solvent, a mixture of isopropyl alcohol and n-hexane (50:50 by volume ratio) was used and as the organic silane compound, trimethylchlorosilane was used.

The mixing ratio of the wet gel, the non-polar organic solvent, and the organic silane compound was a volume ratio of 1: 1:0.5.

The prepared gel of the surface-modified gel was primarily dried at 60 °C for 1 hour under the atmospheric pressure using a drying oven and secondarily dried at 150 °C for 1 hour to prepare a porous inorganic supporter. In the prepared porous inorganic supporter, the average diameter of pores was 20 nm and the pore volume was 1.5 cm³/g. The porosity was 75% and the distance between one pore and an adjacent pore (The thickness of pore walls is defined by the pores) was 10 nm to 15 nm.

A chemical vapor deposition was conducted on the porous inorganic supporter using a SiH₄ gas at a flow rate of 0.5 L/min at 400 °C for 30 minutes to coat Si on an interior wall and a surface of the porous inorganic supporter, thereby forming a silicon layer. The used amount of the SiH₄ gas was adjusted in order to have a weight ratio of the porous inorganic supporter and Si to be 55:45.

The obtained product underwent a chemical vapor deposition using a C₂H₂ gas at a flow rate of 0.3 L/min at 700 °C for 1 hour to fill soft carbon inside of the pores of the porous inorganic supporter and to form a soft carbon coating layer on the surface of the silicon layer on the porous inorganic supporter, thereby preparing a negative active material. The used amount of the C₂H₂ gas was adjusted in order to have a weight ratio of SiO₂: Si:the amorphous carbon to be 49.5 :40.5 : 10. In the prepared negative active material, the thickness of the silicon layer coated on the pores was 16 nm and the thickness of the soft carbon coating layer coated on the silicon layer on the surface of the inorganic supporter surface was 7 nm. In the prepared negative active material, the inside of the pores was partially filled with soft carbon.

The negative active material was used as a first negative active material and artificial graphite was used as a second negative active material.

97.5 wt% of a mixed negative active material of the first negative active material and the second negative active material (a weight ratio of 20:80), 1.5 wt% of a styrene butadiene rubber binder, and 1.0 wt% of a carboxymethyl cellulose thickener were dissolved in a water solvent to prepare a negative active material slurry.

The negative active material slurry was coated on a Cu foil current collector, dried and pressurized under a general procedure to prepare a negative electrode including the current collector and a negative active material layer formed on the current collector.

96 wt% of a LiNi_{0.8}Co_{0.1}Al_{0.1}O₂ positive active material, 2 wt% of a polyvinylidene fluoride binder, and 2 wt% of a ketjen black conductive material were mixed in an N-methyl pyrrolidone solvent to prepare a positive active material slurry.

The positive active material slurry was coated on an Al foil current collector, dried, and pressurized under the general techniques to prepare a positive electrode including the current collector and a positive active material layer on the current collector.

Using the negative electrode, the positive electrode, and an electrolyte, a coin full-cell with a 500 mAh/g was fabricated. The electrolyte used was a 1.5M LiPF₆ dissolved in a mixed solvent of ethylene carbonate, ethylmethyl carbonate and dimethyl carbonate (20:10:70 volume ratio).

### (Example 2)

A negative active material was prepared by the same procedure as in Example 1, except that a chemical vapor deposition using a C₂H₂ gas at a flow rate of 0.3 L/min was conducted at 700 °C for 2 hours. The prepared negative active material included the porous inorganic supporter of which the inside of pores was filled with soft carbon and the soft carbon coating layer on the surface of the silicon layer positioned on the surface of the porous inorganic supporter, and in the negative active material, a weight ratio of SiO₂:Si:the amorphous carbon was 44:36:20. The thickness of the silicon layer coated on the interior wall of the inorganic supporter was 16 nm and a thickness of the soft carbon coating layer coated on the surface of the inorganic supporter surface was 7 nm. The inside of the pores was completely filled with soft carbon.

Using the negative active material, a negative electrode and a coin-type full cell were fabricated by the same procedure as in Example 1.

### (Example 3)

A negative active material was prepared by the same procedure as in Example 1, except that 70 wt% of the product (i.e. the silicon coated porous inorganic supporter) was mixed with 30 wt% of a petroleum pitch and the mixture was heat-treated at 900 °C for 1 hour, instead of conducting a chemical vapor deposition using the C₂H₂ gas on the product according to Example 1. The prepared negative active material included the porous inorganic supporter of which the inside of pores was filled with soft carbon and the soft carbon coating layer on the surface of the silicon layer positioned on the surface of the porous inorganic supporter, and in the negative active material, a weight ratio of SiO₂:Si:the amorphous carbon was 43:35:22. The inside of the pores was completely filled with soft carbon.

Using the negative active material, a negative electrode was fabricated by the same procedure as in Example 1. The negative electrode, the positive electrode of Example 1, and the electrolyte of Example 1 were used to fabricate a coin-type full-cell.

### (Comparative Example 1)

Si was coated on the interior wall of the inorganic supporter to form a silicon layer and Si was coated on the surface to prepare a silicon layer, thereby preparing an inorganic supporter according to Example 1. The inorganic supporter was used as a negative active material.

Using the negative active material, a negative electrode was fabricated by the same procedure as in Example 1. The negative electrode, the positive electrode of Example 1, and the electrolyte of Example 1 were used to fabricate a coin-type full-cell.

### (Comparative Example 2)

Si with a particle diameter of 30 nm to 50 nm was prepared by a PECVD (Plasma-enhanced chemical vapor deposition) and a chemical vapor deposition was conducted thereon by using a C₂H₂ gas at a flow rate of 0.5 L/min in the same procedure as in Example 1, to prepare a negative active material of which the surface was formed with the soft carbon coating layer.

### Experimental Example 1) Evaluation of full width at a half maximum

The X-ray diffraction for silicon in the negative active materials according to Examples 1 to 3 and Comparative Examples 1 and 2 was carried out by using a CuKα to measure a full width at a half maximum, FWHM (111) at a (111) plane.

The X-ray diffraction analysis was measured under a condition of a scan speed (°/s) of 0.054, a step size (°/step) of 0.01313, and time per step of 62.475s in a range of 2θ= 10° to 80°.

The measured results are shown in Table 1.

### Experimental Example 2) Evaluation of capacity

Specific capacities of the cells according to Examples 1 to 3 and Comparative Examples 1 and 2 were measured. The results are shown in Table 1.

### Experimental Example 3) Evaluation of efficiency

The cells according to Examples 1 to 3 and Comparative Examples 1 and 2 were charged and discharged at 0.1 C once. A ratio of the discharge capacity relative to the charge capacity was calculated. The results are shown in Table 1, as an efficiency.

### Experimental Example 4) Evaluation of cycle-life characteristics

The cells according to Examples 1 to 3 and Comparative Examples 1 to 2 were charged at 1 C and discharged at 1 C. A ratio of discharge capacity at each cycle relative to discharge capacity at 1^{st} was calculated. The number of cycles until the capacity ratio, that is, a capacity retention reached 80% are shown in Table 1.

**Table 1**

| | FWHM (111), degrees (°) | Specific capacity (mAg) | Efficiency (%) | Number of cycles (No.) |
|---|---|---|---|---|
| Example 1 | 2 | 1430 | 88 | 510 |
| Example 2 | 2 | 1320 | 87 | 650 |
| Example 3 | 2 | 1300 | 86 | 640 |
| Comparative Example 1 | 2 | 1410 | 81 | 190 |
| Comparative Example 2 | 0.3 | 2540 | 84 | 110 |

As shown in Table 1, the cells of Examples 1 to 3 exhibited high capacity and excellent efficiency characteristics.

On the other hand, Comparative Example 1 exhibited low efficiency and Comparative Example 2 exhibited high capacity and somewhat low efficiency.

The cells of Example 1 to 3 maintained capacity retention of 80%, even after 510 to 650 charge and discharge cycles, thus demonstrating surprisingly excellent cycle-life characteristics. On the other hand, the cells of Comparative Examples 1 and 2 exhibited decreased capacity retention to 80% at 190^{th} or 110^{th} charge and discharge, indicating deteriorated cycle-life characteristics.

While this disclosure has been described in connection with what is presently considered to be practical example embodiments, it is to be understood that the invention is not limited to the disclosed embodiments, but, on the contrary, is intended to cover various modifications and equivalent arrangements included within the scope of the appended claims.

Example embodiments have been disclosed herein, and although specific terms are employed, they are used and are to be interpreted in a generic and descriptive sense only and not for the purpose of limitation. In some instances, as would be apparent to one of ordinary skill in the art as of the filing date of the present application, features, characteristics, and/or elements described in connection with a particular embodiment may be used singly or in combination with features, characteristics, and/or elements described in connection with other embodiments unless otherwise specifically indicated. Accordingly, it will be understood by those of skill in the art that various changes in form and details may be made without departing from the scope of the present invention as set forth in the following claims.

## Claims

1. A negative active material, comprising:
an inorganic supporter in which pores are formed;
a silicon layer coated on the inorganic supporter; and
a carbon-based material positioned in the pores of the inorganic supporter and on a surface of the inorganic supporter.

2. The negative active material as claimed in claim 1, wherein the inorganic supporter comprises Al₂O₃, ZrO₂, SiO₂, TiO₂, SiC, or a combination thereof.

3. The negative active material as claimed in claim 1 or claim 2, wherein the carbon-based material is positioned to completely or partially fill the pores.

4. The negative active material as claimed in any one of claims 1 to 3,
wherein the carbon-based material comprises amorphous carbon, crystalline carbon, or a combination thereof.

5. The negative active material as claimed in any one of claims 1 to 3, wherein the carbon-based material comprises amorphous carbon.

6. The negative active material as claimed in any one of claims 1 to 5,
wherein the silicon layer comprises amorphous silicon, optionally wherein the silicon has a full width at half maximum (FWHM) of about 0.5 degrees (°) to about 10 degrees (°).

7. The negative active material as claimed in any one of claims 1 to 6,
wherein a weight ratio of the inorganic supporter and the silicon layer is about 40:60 to 70:30.

8. The negative active material as claimed in any one of claims 1 to 7,
wherein the silicon layer has a thickness of about 5 nm to about 100 nm.

9. The negative active material as claimed in any one of claims 1 to 8,
wherein the carbon-based material positioned on the surface of the inorganic supporter is positioned at a thickness of about 1 nm to about 50 nm.

10. The negative active material as claimed in any one of claims 1 to 9,
wherein the carbon-based material has a crystal size of about 5 nm or less.

11. The negative active material as claimed in any one of claims 1 to 10, wherein:
(i) an amount of the carbon-based material is about 5 wt% to about 30 wt% based on 100 wt% of the negative active material; and/or
(ii) an amount of silicon included in the negative active material is about 20 wt% to about 60 wt% based on 100 wt% of the negative active material.

12. The negative active material as claimed in any one of claims 1 to 11,
wherein the negative active material is prepared by using the porous inorganic supporter having a porosity of about 10% to about 90%.

13. The negative active material as claimed in claim 12, wherein the pores formed in the porous inorganic supporter have a diameter of about 1 nm to about 100 nm.

14. The negative active material as claimed in claim 12 or claim 13, wherein a distance between the pores is about 5 nm to about 150 nm in the porous inorganic supporter.

15. A rechargeable lithium battery, comprising:
a negative electrode comprising the negative active material of any one of claim 1 to claim 14;
a positive electrode; and
an electrolyte.
